# EUROPÄISCHE PATENTSCHRIFT

(11) **EP 0 988 786 B1**
(45) Veröffentlichungstag und Bekanntmachung des Hinweises auf die Patenterteilung: **06.08.2003**
(21) Anmeldenummer: 99890301.7
(22) Anmeldetag: 22.09.1999
(51) Int. Cl.: A01K 29/00

(54) **Vorrichtung zur Überwachung und gegebenenfalls Betreuung von Nutztieren**
Device for monitoring and, if necessary, tending domestic animals
Dispositif à surveiller et, éventuellement, à soigner des animaux domestiques

(30) Priorität: 25.09.1998 AT 160098
(43) Veröffentlichungstag der Anmeldung: 29.03.2000
(73) Patentinhaber: Schauer Herbert, Mag., 4731 Prambachkirchen (AT)
(72) Erfinder: Schauer Herbert, Mag., 4731 Prambachkirchen (AT)
(74) Vertreter: Hübscher, Helmut, Dipl.-Ing.

(56) Entgegenhaltungen:
- WO-A-97/33273

## Beschreibung

Die Erfindung betrifft eine Vorrichtung zur Überwachung und gegebenenfalls Betreuung von Nutztieren gemäß dem Oberbegriff des Patentanspruches 1.

Bei der Nutztierhaltung zeigt sich immer stärker die Tendenz, eine möglichst große Anzahl von Einzeltieren unter Einsatz eines möglichst geringen Aufwandes an menschlicher Arbeitsleistung nicht nur zu versorgen, sondern auch bis zur Abgabe aus dem Versorgungsbereich hinsichtlich der jeweiligen Lebensumstände zu betreuen und die Aufzucht und die dafür zu erbringenden Leistungen möglichst kostengünstig zu verwalten. Zur Erfüllung dieser Aufgaben werden vorzugsweise zentrale Steuereinheiten verwendet, die z. B. die Entmistung, den Fütterungsablauf und in weiterer Folge den gesamten Tagesablauf für die Einzeltiere bzw. Tiergruppen nach gespeicherten Programmen bestimmen und die entsprechenden Einrichtungen betätigen. Die Automatisierung geht hier teilweise so weit, daß höchstens einmal pro Tag ein Kontrollgang durch den Stall oder den sonstigen Aufenthaltsbereich der Tiere unternommen wird. Es ist zwar denkbar, eine Fernüberwachung des Stalles oder von Stallbereichen unter Verwendung von Tonaufnehmern (Mikrofonen) und bzw. oder nach der bekannten Art der Gebäudeüberwachung mit Hilfe von Fernsehkameras, deren Bilder in der Zentrale auf einen Monitor geschaltet werden, durchzuführen, doch setzt dies in der Praxis eine dauernde Besetzung der Zentrale durch eine oder mehrere Überwachungspersonen voraus, wenn die Überwachung effektiv sein soll und führt auch dann nicht immer zum Ziel. Der Hauptgrund dafür besteht darin, daß bei der Verwendung von Bilderzeugern vorwiegend nur Teilbereiche eines großen Aufenthaltsbereiches für Tiere erfaßt werden können und daß bei der Tonüberwachung die normalen Stallgeräusche, z. B. Bewegungsgeräusche der Tiere, die Mahlgeräusche von Wiederkäuern usw., sowie auch ohne das Vorliegen einer Notsituation abgegebene Tierstimmengeräusche jene Geräusche überdecken, die von Tieren in Notsituationen oder in Situationen abgegeben werden, die z. B. bei Rangordnungs- oder Futterkämpfen Streßeinwirkungen im Stall hervorrufen und daher der gesamten Tiergruppe abträglich sind. Zu erwähnen ist, daß bei der modernen Tierhaltung zumindest größere Tiere, wie Rinder, Schafe, Ziegen und Schweine, mit ldentifizierungsmerkmalen ausgestattet werden können, bei denen es sich im einfachsten Fall um ablesbare Ohrmarken handelt, wobei aber vorzugsweise über automatische Identifizierungseinrichtungen erfaßbare Merkmale in Form entsprechender Ohrmarken oder Implantate im Einsatz sind, die es u. a. ermöglichen, auch bei der Gruppenhaltung jedem Tier einer Gruppe über entsprechend ausgestattete Fütterungseinrichtungen, die in Verbindung mit der zentralen Steuereinheit stehen, nur die ihm zukommende Futterportion zu verabreichen, das Tier bei Anordnung von Wiegeeinrichtungen hinsichtlich der Gewichtszunahme zu überwachen und eine Selektion vorzunehmen, wenn ein Tier nicht das Zunahmesoll erreicht bzw. eine mangelhafte Futteraufnahme festgestellt wird. Für die Selektion werden bei der Gruppenhaltung vorzugsweise mit Fütterungseinrichtungen kombinierte Weichen verwendet, die das für die Fütterung zu einer Futterabgabestelle bzw. einer Tränke gehende, aus der Gruppe auszusondernde Tier in eine andere Abteilung des Stalles leiten. Bei der Einzeltierhaltung ist anderseits jedes Tier schon durch den ihm bleibend zugewiesenen Aufenthaltsplatz identifiziert.

Aus der WO 97/33273 A und weiteren Literaturstellen sind Sprachanalysatoren bekannt, die es ermöglichen, die menschliche Sprache in Steuerbefehle umzuwandeln. Dabei dient eine Gruppe diese Analysatoren dazu, in Maschinensteuerungen durch Eingabe kurzer Sprachbefehle - z. B. Stop, Vollbetrieb usw.-einzugreifen oder die Maschine durch die Möglichkeit, solche Befehle einzugeben, zusätzlich abzusichern. Eine andere, aufwendigere Gruppe soll es ermöglichen, Eingabetastaturen von Schreibgeräten, Rechnern usw. zu ersetzen bzw. zu ergänzen, wobei im einfachsten Fall der gesprochene Text in einen Schriftsatz verarbeitet wird. Im letzteren Fall ist es notwendig, den Sprachanalysator zu "trainieren", also an die Stimme und Sprechweise des jeweiligen Benützers anzupassen.

Aus der US 5 634 436 A ist ein Spielgerät für Haustiere bekannt, das mit einemprogrammierbaren Tonspeicher ausgestattet ist, in dem - jederzeit auf Wunsch veränderbar - Befehle in menschlicher Sprache, Tonfolgen oder sonstige Geräusche gespeichert werden können, wobei am Spielgerät eine Aktivierungseinrichtung, z. B. ein Schnurzug, vorhanden ist, durch dessen Betätigung aus dem Speicher Ton- oder Geräuschfolgen abgerufen werden können, so daß das spielende Tier, z. B. ein Hund, durch diese Geräusche angeregt wird, das Gerät weiter oder mit anderer Geschwindigkeit oder anderer Zeitdauer zu betätigen. Die abgerufenen Geräusch- oder Tonfolgen können über eine Entscheidungslogik auswählbar sein, deren Kriterien wieder durch die Betätigungsart bestimmt werden.

Aufgabe der Erfindung ist die Schaffung einer Überwachungseinrichtung der eingangs genannten Art, die es ermöglichen soll, zumindest Notsituationen, vorzugsweise aber eine Reihe anderer Lebenssituationen der Nutztiere zu erkennen und entsprechende Reaktionen auf die jeweilige Situation, vorzugsweise automatisch, auszulösen.

Die gestellte Aufgabe wird erfindungsgemäß durch die Merkmale des Patentanspruches 1 gelöst.

Der Grundgedanke der Erfindung besteht somit, einfach ausgedrückt, darin, dem Prinzip nach bekannte Sprachanalysatoren für die Überwachung und möglichst auch Betreuung der Tiere zu verwenden und dabei nicht die menschliche Sprache, sondern von Tieren abgegebene Laute bzw. von Tieren erzeugte Geräusche über den Analysator zu verarbeiten und gegebenenfalls in Steuerbefehle umzusetzen. Im Speicher werden die erwähnten Signalfolgen vorzugsweise in digitaler Form gespeichert. Auch die aufgenommenen Signalfolgen werden entsprechend aufbereitet, so daß ein Vergleich in einer Korrelationsrechnerstufe möglich ist. Es wurde festgestellt, daß die Tiere in charakteristischen Situationen, wie Hunger, Durst, Streßeinwirkung durch das Verhalten anderer Tiere, Temperatur, Luftfeuchtigkeit, Luftbeschaffenheit, Geburtsbeginn bei trächtigen Tieren usw, deutlich unterscheidbare und der jelweiligen Situation zuordenbare Laute abgeben, die man auch als Tiersprache bzw. Teil der Tiersprache bezeichnen könnte.

Durch gezielte Verstärkung des Frequenzbandbereiches, in dem diese Laute auftreten, bzw. entsprechende Vorfilterung des Gesamtgeräusches, kann man entsprechende Signalfolgen in einwandfrei identifizierender bzw. identifizierbarer Form trotz des übrigen im Aufenthaltsbereich der Tiere vorhandenen Geräuschpegels gewinnen. Dabei können zur Beeinflussung der Entscheidungslogik noch weitere Parameter herangezogen werden. Solche Parameter sind etwa die Dauer und die Wiederholungshäufigkeit einer Lautäußerung und die jeweilige Lautstärke. Die vorgenommene Analyse der "Tiersprachen" ermöglicht nun eine weitgehende Verbesserung der Überwachung der Tiere und zusätzlich im Bedarfsfall ein Einschreiten aufgrund erkannter Signale für Notsituationen. Abgegebene Tonsignale können als beruhigend für die jeweilige Tierart erkannte Geräusche, aber auch ein gespeichertes beruhigendes Zureden durch einen Pfleger oder in einer Computersprache sein. Schließlich ist es sogar möglich, bei der vorherigen notwendigen Analyse der Tiersprache Laute der Tiere selbst, deren beruhigendes Einwirken auf das Tier bzw. eine Tiergruppe erkannt wurde, zu speichern und gezielt zur Beeinflussung bzw. Beruhigung der Tiere einzusetzen. Ein Alarm braucht nur ausgelöst zu werden, wenn tatsächlich ein direktes Eingreifen einer Aufsichtsperson für den Stall als notwendig erkannt wurde.

Bei der bevorzugten Weiterbildung gemäß Anspruch 2 kann auch die Häufigkeit, nach der ein bestimmtes Tier oder eine Tiergruppe zu "Unzeiten" die Futterausgabe verlangt, gespeichert und bei der nächsten Erstellung des Fütterungsprogrammes berücksichtigt werden.

Bei der Einzeltierhaltung sind der bzw. die Tonaufnehmer so anzubringen, daß die Lautabgaben aller Tiere erfaßt werden können. Bei der Gruppentierhaltung wird man die Tonaufnehmer möglichst in als kritisch erkannten Bereichen des Gesamtaufenthaltsbereiches vorsehen. Insbesondere wird man eine Anbringung gemäß Anspruch 3 wählen, da es in diesem Bereich erfahrungsgemäß am häufigsten zu Raufereien, Verdrängungs- und Rangordnungskämpfen bzw. Schreckreaktionen bei der Selektionierung kommt.

Bereits bei den bisher beschriebenen Ausführungsformen ergibt sich auch in unterschiedlichsten Stallanordnungen die Möglichkeit einer weiteren Automatisierung der Tierbetreuung, wobei ein Ersatz einer direkten Ansprache oder Behandlung der Tiere durch eine Betreuungsperson angeboten wird. Es ist auch möglich, den Beginn der Futterzuteilung für eine Gruppe durch automatisches Ansprechen der Gruppe bekanntzugeben und bei Kämpfen in einer Herde durch Lautsignale beruhigend einzuwirken. Aus der Speicherung der Art und Anzahl von Situationen, in denen über die Überwachungseinrichtung in irgendeiner Form eine bestimmte Reaktion, sei es automatisch oder durch Eingreifen einer Betreuungsperson, hervorgerufen wurde, kann man auf mögliche Fehler oder sonstige Unzukömmlichkeiten im Betreuungs- oder Fütterungsprogramm der Tiere schließen und Abhilfe schaffen. Bei einer ebenfalls möglichen Einzelidentifikation der Tiere einer Gruppe lassen sich besonders "lästige" Tiere identifizieren und aus der Gruppe aussondern.

Die erfindungsgemäße Vorrichtung läßt sich in mancher Hinsicht weiter verfeinern und vervollkommnen. Bei der Möglichkeit nach Anspruch 4 können auch weitere Parameter bei der Entscheidung berücksichtigt werden. Eine charakteristische Bewegung bzw. Bewegungshäufigkeit in der Gruppe ist etwa zur Fütterungszeit normal, zeigt aber außerhalb der Fütterungszeit und insbesondere in Kombination mit bestimmten Lautäußerungen der Tiere Kämpfe, Schreckverhalten usw. der Tiere an. Einfache Bewegungsmelder sind aus der Raumüberwachung oder auch zur Steuerung einer Raum- oder Außenbeleuchtung bekannt. Erfindungsgemäß wird aber vorzugsweise eine Ausbildung nach Anspruch 5 gewählt. Die erhaltenen Bilder können zugleich in einer Zentrale gespeichert werden, so daß dort kritische Situationen im Bild erfaßt sind.

Bei der schon oben erwähnten Ausbildung nach Anspruch 6 läßt sich leicht feststellen, welches Tier ein Notsignal gegeben hat bzw. der schon erwähnte Unruhestifter ist. Eine weitere Möglichkeit besteht darin, die Stimmerkennung zur Identifizierung der Tiere oder als ldentifizierungshilfe zu verwenden, so daß allenfalls auf Implantate oder elektronisch ablesbare Ohrmarken verzichtet werden kann. Eine Ergänzungsmöglichkeit der letztgenannten Ausführung bietet sich an, wenn elektronische Bilderzeuger zusätzlich auch für die Identifizierung Verwendung finden. Hier könnte man an einer Fütterungsstelle einen Bilderzeuger vorsehen, der das Netzhautmuster im Tierauge aufnimmt und mit entsprechenden Speicherbildern vergleicht.

Schließlich ist sogar eine Ausführungsform gemäß Anspruch 7 möglich.

Der Stallroboter kann auf einer Hängebahn, auf Bodenschienen oder auch unter Verwendung entsprechender Sensoren nach im Boden verlegten Leiterbahnen verfahren werden. Man kann auch mehrere Roboter verwenden, die nur einen Teil der angeführten Funktionen erfüllen und je nach Bedarf zum Einsatzort gesteuert werden. Neben der Abgabe von Futter, Wasser und Medikamenten kann das Auftauchen des Roboters bei einer in Kämpfe verwickelten oder verängstigten Tiergruppe an sich schon beruhigend wirken, wobei diese beruhigende Einwirkung verstärkt wird, da der Roboter kämpfende Tiere trennen oder ablenken kann und überdies durch Ton- und Lichtsignale auf die Tiere einwirkt. Weitere verschiedene Ausführungsformen sind möglich, wobei nach einer von ihnen die zentrale Steuereinheit selbt am entsprechend großen Roboter vorgesehen wird. Nach einer anderen Ausführung ist eine Steuerung in der Form möglich, daß über die Ton- bzw. Bewegungsüberwachungseinrichtungen in einem bestimmten Stallbereich Handlungsbedarf festgestellt wird, wobei die Steuereinheit den Roboter in diesen Stallbereich steuert, der Roboter dort die Momentansituation aufnimmt und, falls er entsprechend ausgestattet ist, im oben erwähnten Sinn beeinflußt. Ein mit entsprechenden Sensoren ausgestatteter Roboter kann außerdem periodisch oder aperiodisch Kontrollfahrten durch den gesamten Stall unternehmen, an vorbestimmten Stellen Daten speichern und die Daten der zentralen Steuereinheit zur weiteren Verwaltung bzw. Verarbeitung übergeben. Durch Bewegung und Signalabgabe kann überdies der Roboter einen wesentlich stärkeren Einfluß auf eine Herde oder Tiergruppe gewinnen als ortsfeste Signalgeber.

## Patentansprüche

1. Vorrichtung zur Überwachung und gegebenenfalls Betreuung von Nutztieren, unter Verwendung wenigstens eines Tonaufnehmers, der mit einem Geräuschanalysator verbunden ist, welcher einen Speicher, eine Vergleicherstufe und wenigstens einen Steuerausgang besitzt, **dadurch gekennzeichnet, daß** im Speicher Signalfolgen gespeichert sind, die aus der Überwachung der Tierstimme des Einzeltieres, der Tierstimmen einer Tiergruppe bzw. von Tieren der entsprechenden Tierart oder der von dem bzw. den Tieren erzeugten Geräusche in charakteristischen Situationen gewonnen wurden, daß für die von dem Tonaufnehmer erfaßten Geräusche ein diese Geräusche in mit den gespeicherten vergleichbare Signalfolgen aufbereitender Wandler vorgesehen ist und daß die Vergleicherstufe entsprechend dem Übereinstimmungsgrad dieser Signalfolgen mit einer oder mehreren gespeicherten Signalfolgen Eingangssignale für den Steuerausgang erzeugt, wobei eine Entscheidungslogik vorgesehen ist, die im Bedarfsfall eine Betätigung von Einrichtungen zur Beeinflussung der aus den Tiergeräuschen erfaßten Situation, z. B. durch Futterabgabe, Erzeugung von Licht- oder Tonsignalen im Aufenthaltsbereich der Tiere, Änderung der Einstellung oder Ein- bzw. Ausschaltung der Belüftungseinrichtung bzw. Abgabe eines Alarmes durch den Steuerausgang freigibt.

2. Vorrichtung nach Anspruch 1, **dadurch gekennzeichnet, daß** der Steuerausgang des Geräuschanalysators mit einer zentralen Steuereinheit verbunden ist, die zumindest die Futterausgabe an die Einzeltiere, vorzugsweise aber den gesamten Tagsablauf im Stall, regelt.

3. Vorrichtung nach Anspruch 1 oder 2, **dadurch gekennzeichnet, daß** bei ihrem Einsatz für in Gruppen gehaltene Tiere ein Tonaufnehmer im Bereich einer gegebenenfalls mit einer Selektioniereinrichtung kombinierten Futterausgabestelle mit zugeordneter Tiererkennungseinrichtung vorgesehen ist.

4. Vorrichtung nach einem der Ansprüche 1 bis 3, **dadurch gekennzeichnet, daß** zusätzlich zum Geräuschanalysator ein wenigstens einen Teil des Aufenthaltsbereiches der Tiere erfassender Bewegungsmelder vorgesehen und mit der Entscheidungslogkik zur Abgabe von Steuersignalen bei als kritisch identifizierten Bewegungsabläufen verbunden ist.

5. Vorrichtung nach Anspruch 4, **dadurch gekennzeichnet, daß** als Bewegungsmelder ein elektronischer Bilderzeuger vorgesehen ist und die Entscheidungslogik einen Analysator für Bewegungsabläufe in den vom Bilderzeuger gewonnenen Bildern enthält.

6. Vorrichtung nach einem der Ansprüche 1 bis 5, **dadurch gekennzeichnet, daß** bei einer Gruppenhaltung der Tiere im Speicher aus der Stimme jedes Einzeltieres der Gruppe gewonnene Signalfolgen gespeichert sind, so daß jedes Tier in einer mit dem Tonaufnehmer verbundenen Erkennungsstufe nach seiner Stimme identifizierbar ist.

7. Vorrichtung nach einem der Ansprüche 1 bis 6, **dadurch gekennzeichnet, daß** die Steuereinheit wenigstens einen zum Aufenthaltsbereich von Einzeltieren oder Tiergruppen verstellbaren Stallroboter steuert, der Einrichtungen zur Bereinigung einer erfaßten Momentansituation aufweist, z. B. nach Art eines Futterwagens mit Ausgabeeinrichtungen für mitgeführtes Futter, Wasser oder Medikamente bzw. mit den Signalgebern ausgestattet ist und bzw. oder selbst eine oder mehrere Überwachungseinrichtungen, nämlich Tonaufnehmer, Bewegungsmelder, Temperatur- und Luftbeschaffenheitsprüfer bzw. in Kombination mit Tieridentifizierungseinrichtungen, Erfassungssysteme für Tierdaten und Ausgabeeinrichtungen zur Weitergabe dieser Daten an die auch für Stallverwaltung programmierte zentrale Steuereinheit aufweist.

## Claims

1. Apparatus for monitoring and where applicable attending to domestic animals, using at least one sound pick-up connected to a noise analyser having a memory, a comparator stage and at least one control output, **characterised in that** there are stored in the memory signal sequences which have been obtained from monitoring the voices of the individual animal, the voices of a group of animals or animals of the corresponding type of animal, and the noises produced by the animal or animals, in characteristic situations, **in that** a transducer is provided for the noise detected by the sound pick-up, said transducer processing said noise into signal sequences which can be compared with the stored signal sequences and **in that** in accordance with the degree of correspondence of these signal sequences with one or more stored signal sequences the comparator stage generates input signals for the control output, a decision logic being provided which, if required, triggers an actuation of devices for influencing the situation detected from the animal noise, for example by delivery of fodder, generation of light or sound signals in the animal accommodation area, change of the setting or switching on and off of the ventilation equipment or the giving of an alarm by the control output.

2. Apparatus according to claim 1, **characterised in that** the control output of the noise analyser is connected to a central control unit which controls at least the delivery of fodder to the individual animals, but preferably the entire daily delivery in the stall.

3. Apparatus according to claim 1 or 2, **characterised in that** when used for animals kept in groups, a sound pick-up is provided in the area of a fodder delivery station with an associated animal recognition device, said fodder delivery station being combined with a selectioning device if required.

4. Apparatus according to any one of claims 1 to 3, **characterised in that** in addition to the noise analyser a movement transmitter is provided which detects at least part of the animal accommodation area and is connected to the decision logic to deliver control signals if the movement sequences are identified as critical.

5. Apparatus according to claim 4, **characterised in that** the movement transmitter is an electronic image generator and the decision logic contains an analyser for movement sequences in the images produced by the image generator.

6. Apparatus according to any one of claims 1 to 5, **characterised in that** when animals are kept in groups signal sequences obtained from the voice of each individual animal of the group are stored in the memory so that each animal can be identified by its voice in a recognition stage connected to the sound pick-up.

7. Apparatus according to any one of claims 1 to 6, **characterised in that** the control unit controls at least one stall robot which is adjustable in relation to the accommodation area for individual animals or groups of animals, said robot comprising means for handling a detected instantaneous situation, for example after the style of a fodder carriage with delivery devices for entrained fodder, water, or drugs, or is equipped with signal generators and/or itself comprises one or more monitoring devices, namely sound pick-ups, movement transmitters, temperature and air nature testing devices or in combination with animal identification devices, detection systems for animal data and outputting means for transmitting said data to the central control unit which is also programmed for stall management.

## Revendications

1. Dispositif à surveiller, éventuellement soigner, des animaux domestiques, en utilisant au moins un enregistreur de son, relié à un analyseur de bruit, comportant une mémoire, un étage comparateur et au moins une sortie de commande, **caractérisé en ce que**, dans la mémoire, sont mémorisées des suites de signaux ayant été obtenus par la surveillance de la voix des animaux individuels, des voix animales d'un groupe d'animaux ou d'animaux du genre d'animaux correspondants, ou bien des bruits générés par le ou les animaux dans des situations caractéristiques, **en ce que**, pour les bruits captés par l'enregistreur de sons, est prévu un convertisseur traitant ces bruits pour obtenir des suites de signaux comparables à ceux mémorisés, et **en ce que** l'étage comparateur produit, de manière correspondante aux degrés de coïncidence de ces suites de signaux avec une ou plusieurs suites de signaux mémorisés, des signaux d'entrée pour la sortie de commande, une logique de décision étant prévue, qui, en cas de besoin, autorise un actionnement de dispositifs pour influer sur la situation détectée d'après les bruits des animaux, par exemple par une délivrance d'aliment animal, la production de signaux lumineux ou sonores dans la zone de séjour des animaux, une modification du réglage ou une mise en service ou hors service du dispositif de ventilation, ou la délivrance d'une alarme par la sortie de commande.

2. Dispositif selon la revendication 1, **caractérisé en ce que** la sortie de commande de l'analyseur de bruit est reliée à une unité de commande centrale, réglant au moins la délivrance d'alimentation animale aux différents animaux, de préférence cependant réglant l'ensemble du scénario quotidien à l'étable.

3. Dispositif selon la revendication 1 ou 2, **caractérisé en ce que**, concernant leur utilisation pour des animaux maintenus en groupe, un enregistreur de sons est prévu dans la zone d'un poste de délivrance d'alimentation animale, combiné le cas échéant à un dispositif de sélection, avec un dispositif d'identification des animaux associé.

4. Dispositif selon l'une des revendications 1 à 3, **caractérisé en ce que**, en plus de l'analyseur de bruit, est prévu un avertisseur de déplacement, appréhendant au moins une partie de la zone de séjour des animaux, et avec une logique de décision pour délivrer des signaux de commande dans le cas où les déroulements cinématiques sont identifiés comme étant critiques.

5. Dispositif selon la revendication 4, **caractérisé en ce qu'**est prévu, à titre d'avertisseur de déplacement, un générateur d'image électronique et la logique décisionnelle contient un analyseur, des déroulements cinématiques dans les images obtenues par le générateur d'image.

6. Dispositif selon l'une des revendications 1 à 4, **caractérisé en ce que**, dans le cas d'un maintien groupé des animaux, dans la mémoire sont mémorisées des suites de signaux obtenues à partir de la voix de chaque animal individuel du groupe, de manière que chaque animal puisse être identifié d'après sa voix, dans un étage d'identification lié à l'enregistreur de sons.

7. Dispositif selon l'une des revendications 1 à 6, **caractérisé en ce que** l'unité de commande commande au moins un robot d'étable, réglable par rapport à la zone de séjour des animaux individuels ou des groupes d'animaux, robot d'étable présentant des dispositifs pour apurer une situation momentanée appréhendée, par exemple à la façon d'un chariot d'alimentation animale munie de dispositifs de délivrance, embarquant de la nourriture, de l'eau ou des médicaments, ou munis de capteur de signaux et/ou comportant lui-même un ou plusieurs dispositifs de surveillance, précisément des enregistreurs de son, des indicateurs de déplacement, des vérificateurs de température et de caractéristiques de l'air, ou bien, en combinaison avec des dispositifs d'identification des animaux, des systèmes de détection de données d'animaux et des dispositifs de délivrance, pour transmettre ces données à l'unité de commande centrale programmée également pour la gestion de l'étable.
